Europäisches Patentamt

European Patent Office

Office européen des brevets

(19)

(11) **EP 0 629 779 B1**

(12) **EUROPÄISCHE PATENTSCHRIFT**

(45) Veröffentlichungstag und Bekanntmachung des
Hinweises auf die Patenterteilung:
**13.01.1999   Patentblatt 1999/02**

(51) Int Cl.6: **F04D 29/22**, F01D 5/14

(21) Anmeldenummer: **94107192.0**

(22) Anmeldetag: **07.05.1994**

(54) **Strukturierte Oberflächen von Strömungsmaschinenbauteilen**

Structured surfaces for component parts of turbomachines

Structure des surfaces pour pièces constitutives de machines rotatives à fluide

(84) Benannte Vertragsstaaten:
**CH DE FR GB IT LI NL**

(30) Priorität: **15.06.1993   DE 4319628**

(43) Veröffentlichungstag der Anmeldung:
**21.12.1994   Patentblatt 1994/51**

(73) Patentinhaber: **KSB Aktiengesellschaft
67227 Frankenthal (DE)**

(72) Erfinder:
• **Brodersen, Sönke, Dr.
D-69198 Schriesheim (DE)**
• **Schill, Jürgen
D-67273 Weisenheim am Berg (DE)**
• **Warth, Helmut
D-67065 Ludwigshafen (DE)**

(56) Entgegenhaltungen:
EP-A- 0 471 089          WO-A-92/05341
DE-A- 1 937 395          DE-A- 3 534 293
DE-A- 3 609 541          US-A- 3 481 531
US-A- 4 720 239

**Beschreibung**

Die Erfindung betrifft eine Strömungsmaschine gemäß dem Oberbegriff des Hauptanspruches.

Bauteile von Strömungsmaschinen werden mit Hilfe unterschiedlicher bekannter Verfahren produziert. Die Oberflächen derartiger Bauteile, die mit dem innerhalb der Pumpe befindlichen Fördermedium in Berührung kommen, weisen durch die Herstellung bedingte Oberflächenrauhigkeiten auf, die aus hydraulischer Sicht nachteilig sind. An diesen Oberflächen auftretende Oberflächenreibung ist ursächlich dafür, daß der Wirkungsgrad eines derartigen Aggregates negativ beeinflußt wird. Entsprechend der jeweiligen Leistung einer Strömungsmaschine können die durch die Oberflächenreibungen entstehenden Verlustleistungen sehr groß werden. Zur Verminderung dieser Verlustleistungen und zur Anhebung des Gesamtwirkungsgrades einer Pumpe ist es daher üblich, die flüssigkeitsberührten Teile so glatt wie möglich zu gestalten.

Andererseits ist es durch die DE-PS 36 09 541 bei Flugzeugen bekannt, gradlinig verlaufende, zueinander versetzt angeordnete Staffeln von gegenüber der Oberfläche vorstehenden Rippen vorzusehen. Diese Form der Rippen soll durch Warmwalzen oder Gießen von Plastikfolien hergestellt werden, um sodann auf Flugzeugoberflächen angebracht zu werden. Damit soll eine Reduzierung des Reibungswiderstandes eines Flugzeuges erreicht werden.

Durch die DE-A-35 34 293, die sämtliche Merkmale des Oberbegriffs des Anspruchs 1 offenbart, ist es bekannt, aus Faserverbundwerkstoffen hergestellte und umströmte Oberflächen mit einer besonderen Oberflächenstruktur zu versehen. Dazu sollen die Werkstofffasern eine besondere Ausrichtung erhalten, um an der Oberfläche eine Reduzierung der Reibungskräfte zu bewirken. Ähnlich verhält es sich mit der DE-C-35 28 135, die sich mit der Verringerung des strömungsmechanischen Reibungswiderstandes bei Luft-, Raum- und Wasserfahrzeugen befaßt. Dazu wird ein auf der angeströmten Körperoberfläche angeordnetes Rillenprofil in asymmetrischer Feinstruktur verwandt.

Durch die EP-A-0 471 089 ist eine Sonderbauform einer Pumpe bekannt, deren Förderwirkung durch die Kombination von Adhäsionskräften und Zentrifugalkräften erfolgt. Sie ist abgeleitet von den sogenannten Reibungspumpen mit schaufellosen Laufrädern, bei denen die Förderwirkung ausschließlich durch Reibungskräfte zwischen zwei rotierenden Scheiben erzeugt wird. Deren Förderleistung soll hier durch eine zusätzliche, eine Pumpwirkung erzeugende Beschaufelung im Millimeterbereich vergrößert werden.

Und durch die WO 92/05341 ist eine Strömungsmaschine bekannt, bei der die strömungsführenden Flächen der Laufräder oder Propeller analog einem Wellblechprofil gestaltet sind. Die einzelnen Wellen weisen dazu eine in Strömungsrichtung divergierende Form auf. Es ist keine Aussage über die Größe der Wellen enthalten, aufgrund der Abbildungen müssen deren Radien jedoch im Zentimeter-Bereich liegen.

Der Erfindung liegt das Problem zugrunde, den Wirkungsgrad von Strömungsmaschinen durch Verlustreduzierung zu verbessern.

Die Lösung dieses Problems gemäß Anspruch 1 sieht vor, daß auf den Oberflächen, die von einer strömenden Flüssigkeit berührt werden, eine scharfkantige feine Rillenstruktur aufgebracht ist, wobei die aus einer oder mehreren Rillen bestehende Rillenstruktur einen spiralförmigen Verlauf aufweist und sich überwiegend in Strömungsrichtung erstreckt. Als Strömungsrichtung wird hierbei die resultierende Strömungsrichtung angesehen, welche sich aus axialen, radialen und tangentialen Komponenten zusammensetzt. Eine derartige Struktur ist in der Lage, im Bereich der einzelnen Bauteiloberflächen der Strömungsmaschine eine gravierende Reduzierung der Oberflächenreibung herbeizuführen.

Eine Ausgestaltung der Erfindung sieht vor, daß ein durch Rillenbreite und Rillentiefe definierter Rillenquerschnitt in der Größenordnung von $\mu m^2$ liegt. Diese Rillen, welche vorzugsweise einen V- oder U-förmigen Querschnitt aufweisen, können im Bereich der Radseiten eines Laufrades, der Gehäuseseiten oder innerhalb einer durchströmten Leiteinrichtung oder eines Laufrades gravierende positive Verbesserungen bewirken. Deutliche Verbesserungen ergeben sich auch bei der Anbringung an überströmten, stillstehenden Gehäuseflächen.

Gemäß einer weiteren Ausgestaltung weist eine aus mehreren Rillen bestehende Rillenstruktur parallel zueinander oder in Strömungsrichtung geringfügig auseinanderlaufende Rillen auf. Mittels dieser Maßnahme wird es erstmals möglich, innerhalb einer Strömungsmaschine, beispielsweise einer radialen Kreiselpumpe oder Turbine, diejenigen Oberflächen verlustminimierend zu gestalten, die einer kreisenden Flüssigkeitsströmung ausgesetzt sind. In gleicher Weise kann dies beispielsweise bei den stillstehenden Gehäusewandflächen oder den rotierenden Laufradwandflächen erfolgen. Es ist auch möglich, die ebenfalls in bezug auf ihre Länge einen spiralförmigen Verlauf aufweisenden Strömungskanäle der Leitradeinrichtungen oder der Laufräder dementsprechend zu gestalten.

Bezüglich der Herstellung dieser Rillenstruktur sehen Ausgestaltungen der Erfindung vor, daß die Rillenstruktur in die Oberflächen der Bauteile eingearbeitet oder Bestandteil einer Oberflächenbeschichtung der Bauteile sind. Dies kann mit spanabhebender Mikrobearbeitung der Bauteil- bzw. Beschichtungsoberfläche erfolgen. Es ist aber auch möglich, innerhalb von stillstehenden oder rotierenden, von Flüssigkeit durchströmten Kanälen mit einer entsprechenden Rillenstruktur ausgestattete Folien anzubringen.

Eine andere Ausgestaltung sieht vor, daß die Rillenstruktur in einer die Oberfläche gestaltender Weise in eine flüssigkeitsberührte Oberfläche oder in eine die flüssigkeitsberührte Oberfläche erzeugende Formteiloberfläche eingearbeitet ist. Bei der Oberfläche kann es sich auch um eine beschichtete Oberfläche handeln. So wäre es möglich, bei mechanisch bearbeiteten Laufrädern oder Gehäusewandflächen die Oberfläche mit einem Drehwerkzeug zu bearbeiten, welches die Mikrostruktur der Rillenstrukturen herzustellen vermag. Dies wäre auch mit einem entsprechenden Drehmeißel auf einer Drehmaschine möglich. Gleiches könnte in analoger Weise in Formwerkzeugen stattfinden, mit deren Hilfe ein Laufrad oder eine Gehäusewandfläche gegossen oder spritzgeformt wird. Jedes die Form verlassende Bauteil der Strömungsmaschine wäre dann mit einer derartigen Rillenstruktur ausgestattet.

Möglich ist auch die Einbringung der Rillenstruktur auf Oberflächen durch elektrochemisches Abtragen mittels entsprechend der Rillenstruktur geformter Elektroden. Denkbar ist auch die Einarbeitung der Oberflächenstruktur durch sogenannte Fotolack-Ätzverfahren, wie sie in der Halbleiterfertigung zur Erzeugung der Mikroschaltkreise Verwendung finden oder durch Oberflächenbearbeitung durch Laserstrahlverfahren.

Die in Anspruch 7 beschriebene vorteilhafte Bemessung der Rillenstruktur ergibt besonders wirkungsvolle Widerstandsreduzierungen.

Ein Ausführungsbeispiel der Erfindung ist in den Zeichnungen dargestellt und wird im folgenden näher beschrieben. Es zeigen die

Fig. 1          einen Querschnitt durch eine Strömungsmaschine in radialer Bauart, die

Fig. 2 - 4      Draufsichten auf eine Laufrad- oder Gehäuseseitenwand, die

Fig. 5          eine Draufsicht auf eine Abwicklung eines umströmten Schaufelanfanges, und die

Fig. 6 und 7    vergrößerte Querschnitte durch verschiedene Rillenstruktur-Oberflächen.

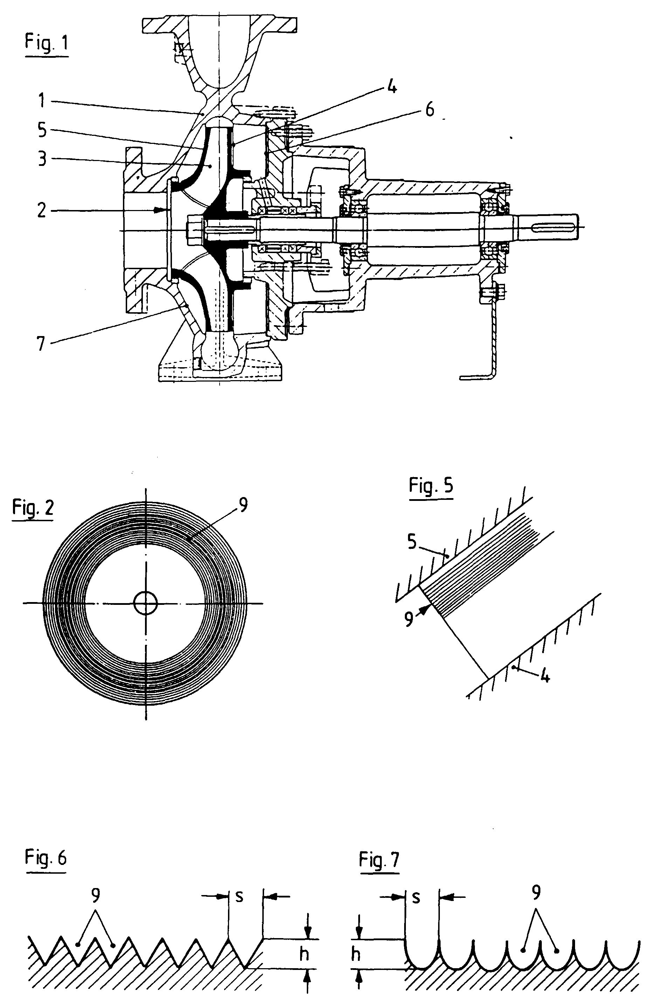

In der Fig. 1 ist ein Querschnitt durch eine Strömungsmaschine radialer Bauart gezeigt. Je nach Durchströmrichtung kann es sich um eine Pumpe oder um eine Turbine handeln. Innerhalb eines Gehäuses 1 ist ein Laufrad 2 mit mehreren Schaufeln 3 angeordnet. Die Schaufeln 3 sind hierbei zwischen einer energieübertragenden Tragscheibe 4 und einer Deckscheibe 5 angeordnet. Den letzteren gegenüberliegend befinden sich stillstehende Gehäusewandflächen 6, 7. Der Außendurchmesser des Laufrades 2 kann hierbei umgeben sein von einer Leiteinrichtung, die als Spirale oder als Leitrad ausgebildet sein kann. Die Erfindung ist nicht auf die hier beispielhaft gezeigte radiale Ausführungsform beschränkt, sondern sie kann auch bei anderen Bauformen Verwendung finden.

Die Fig. 2 zeigt eine Draufsicht auf eine Wandfläche, die mit einer Rillenstruktur 9 versehen ist. Diese Wandfläche kann Bestandteil der Tragscheibe 4, der Deckscheibe 5 oder einer Gehäusewandfläche 6, 7 sein; es kann also sowohl eine rotierende oder stillstehende Wandfläche sein. Die darauf angebrachte Rillenstruktur verfügt hierbei über einen dimensionslosen Rillenabstand $s^+$ in der Größenordnung $s^+ = 5 - 25$ und eine dimensionslose Rillenhöhe $h^+$ in der gleichen Größenordnung. Dabei ist

$$s^+ = \frac{s \cdot U_\infty}{\nu} \cdot \sqrt{\frac{c_f}{2}}$$

mit

$s$ = Rillenabstand          (m)
$U_\infty$ = Geschwindigkeit der freien Strömung (m/sec)
$\nu$ = kinematische Viskosität des Strömungsmediums          (m²/sec)
$c_f$ = lokaler Wandreibungskoeffizient          (./.)

Analog verhält es sich mit der Rillenhöhe $h^+$.

Die die Rillenstruktur bildenden Rillen können hier in Form einer Vielzahl von konzentrisch angeordneten Kreisen ausgebildet sein; sie kann aber auch durch eine oder mehrere spiralförmige Rille oder Rillen gebildet werden, welche der relativen Bewegung des Fluids auf der Oberfläche entsprechend angeordnet sind.

Eine Variante einer ausschnittsweise dargestellten Rillenstruktur an stehenden, oder wie hier dargestellt an einer rotierenden Deckscheibe 5 eines Laufrades, ist in Fig. 3 gezeigt. Diese Form ist auch vorteilhaft für diejenigen Wandflächen, bei denen eine zu beeinflussende Strömung aus einem Zentrum nach außen strömt. Da bei einer aus dem Zentrum spiralförmig nach außen verlaufenden Rillenstruktur 9 nach einer bestimmten radialen Erstreckung nicht mehr der vorteilhafte Rillenabstand von $s^+$ oder die Rillenhöhe $h^+ = 5 - 25$ einzuhalten ist, werden dann ab einem entsprechenden radialen Abstand zusätzliche, kürzere Rillen 10 zwischen den durchgehenden Rillen der Rillenstruktur 9 angeordnet. Damit kann dann die durch die Auffächerung bedingte Abstandsvergrößerung ausgeglichen werden. Je nach dem Durchmesser der mit Rillen zu versehenden Oberflächen können auch mehrere Gruppen von kürzeren Rillen 10 auf unterschiedlichen radialen Abständen angeordnet werden. In vorteilhafter Weise erstrecken sich alle Rillen immer in Richtung der Hauptströmung. Demgegenüber stellen die konzentrisch oder spiralförmig angeordneten Rillen einen die Herstellung vereinfachenden Fall dar. Die Fig. 4 zeigt beispielhaft ebenfalls eine nur ausschnittsweise dargestellte Rillenstruktur ohne zusätzlich kurze Rillen 10. Der Rillenabstand s vergrößert sich dabei in Strömungsrichtung, wobei dieser so auszubilden ist, daß der angegebene s⁺-Bereich eingehalten wird. Entsprechend vergrößert sich auch die Rillenhöhe h in Richtung der Hauptströmung.

Die Fig. 5 zeigt ausschnittsweise eine Rillenstruktur 9 an einer Schaufel, die sowohl als Laufradschaufel 3 oder als Schaufel einer - hier nicht dargestellten - Leiteinrichtung Verwendung finden kann. Selbstverständlich ist die Rillenstruktur 9 auch an denjenigen Wandflächen angebracht, an denen die Schaufeln 3 befestigt sind und die von Schaufeln 3 eingeschlossene Strömungskanäle abdecken.

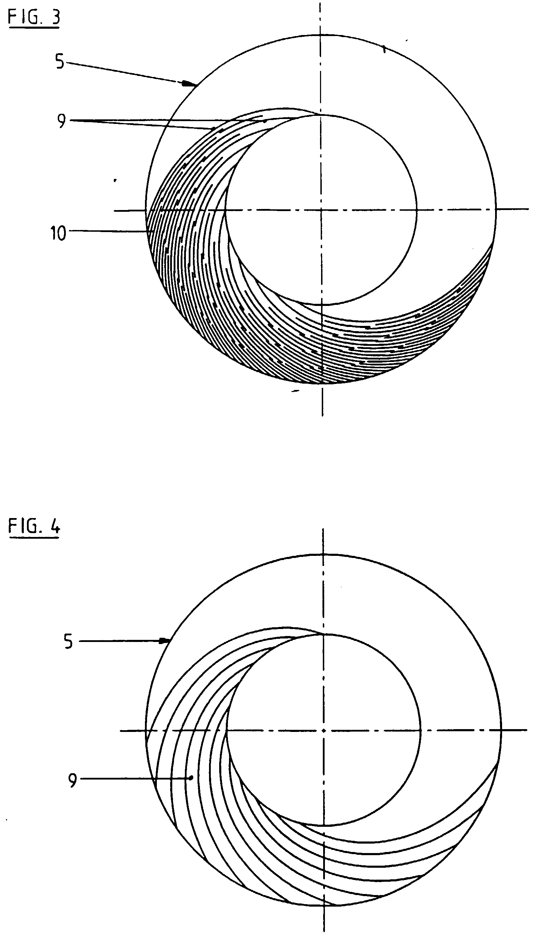

In den Fig. 6 und 7 sind verschiedene Querschnittsformen von Rillenstrukturen 9 oder Rillen 10 aufgezeigt, wobei deren Form einem Schnitt quer zum Verlauf einer Rillenstruktur 9 entspricht. In der Fig. 5 ist ein V-förmiger Rillenquerschnitt gezeigt, während gemäß Fig. 6 auch ein im wesentlichen U-förmiger Rillenquerschnitt Verwendung finden kann. Die Rillenstruktur kann gemäß den in den Ansprüchen beschriebenen Maßnahmen erstellt werden. Die zur Bemessung der Rillenstruktur eingezeichneten Maße h und s sind hier dimensionsbehaftet. Entsprechend der Strömungsverhältnisse der jeweiligen Maschine sind diese Maße mit Hilfe der oben aufgeführten Gleichung ermittelbar.

**Patentansprüche**

1. Strömungsmaschine in Form einer Pumpe oder Turbine, deren von strömenden Flüssigkeiten berührten Oberflächen mit einer Oberflächenstruktur versehen sind, die auf den Oberflächen in Form einer feinen scharfkantigen Rillenstruktur aufgebracht ist, wobei die geordnete Rillenstruktur (9, 10) sich überwiegend in Strömungsrichtung erstreckt, **dadurch gekennzeichnet**, daß ein dimensionsloser Rillenabstand (s⁺) und eine dimensionslose Rillenhöhe (h⁺) in der Größenordnung von h⁺; s⁺ = 5-25 liegt und daß die aus einer oder mehreren Rillen bestehende Rillenstruktur (9, 10) einen spiralförmigen Verlauf aufweist.

2. Strömungsmaschine nach Anspruch 1, dadurch gekennzeichnet, daß der durch Rillenbreite (s⁺) und Rillenhöhe (h⁺) definierte Rillenquerschnitt in der Größenordnung von µm² liegt.

3. Strömungsmaschine nach Anspruch 1 oder 2, dadurch gekennzeichnet, daß eine aus mehreren Rillen bestehende Rillenstruktur (9, 10) parallel zueinander oder in Strömungsrichtung geringfügig auseinanderlaufende Rillen aufweist.

4. Strömungsmaschine nach Anspruch 1, 2 oder 3, dadurch gekennzeichnet, daß die Rillenstruktur (9, 10) in die Oberflächen eingearbeitet ist.

5. Strömungsmaschine nach einem der Ansprüche 1, 2 oder 3, dadurch gekennzeichnet, daß die Rillenstruktur (9, 10) Bestandteil einer Oberflächenbeschichtung ist.

6. Strömungsmaschine nach einem der Ansprüche 1 bis 5, dadurch gekennzeichnet, daß die Rillenstruktur in einer die Oberfläche gestaltender Weise in eine flüssigkeitsberührte Oberfläche oder in eine die flüssigkeitsberührte Oberfläche erzeugende Formteiloberfläche eingearbeitet ist.

7. Strömungsmaschine nach einem der Ansprüche 1 bis 6, dadurch gekennzeichnet, daß das Verhältnis von dimensionsloser Rillenhöhe (h⁺) zu dimensionslosem Rillenabstand (s⁺) ≤ 1 ist.

**Claims**

1. Fluid-flow machine in the form of a pump or turbine, whose surfaces with which flowing liquids are in contact are provided with a surface structure which is applied to the surfaces in the form of a fine, sharp-edged groove structure, the orderly groove structure (9, 10) extending mainly in the direction of flow, characterized in that a dimensionless groove spacing (s⁺) and a dimensionless groove height (h⁺) are in the order of magnitude of h⁺; s⁺ = 5-25, and in that the groove structure (9, 10) consisting of one or more grooves has a spiral pattern.

2. Fluid-flow machine according to Claim 1, characterized in that the groove cross-section defined by the groove width (s⁺) and groove height (h⁺) is in the order of magnitude of µm².

3. Fluid-flow machine according to Claim 1 or 2, characterized in that a groove structure (9, 10) consisting of a plurality of grooves has grooves which run parallel to one another or diverge slightly in the direction of flow.

4. Fluid-flow machine according to Claim 1, 2 or 3, characterized in that the groove structure (9, 10) is made in the surfaces.

5. Fluid-flow machine according to one of Claims 1, 2 or 3, characterized in that the groove structure (9, 10) is a component of a surface coating.

6. Fluid-flow machine according to one of Claims 1 to 5, characterized in that the groove structure, in a manner which fashions the surface, is made in a surface with which liquid is in contact or in a formed-part surface which produces the surface with which liquid is in contact.

7. Fluid-flow machine according to one of Claims 1 to 6, characterized in that the ratio of dimensionless groove height ($h^+$) to dimensionless groove spacing ($s^+$) is ≤1.

**Revendications**

1.  Turbomachine sous la forme d'une pompe ou d'une turbine, dont les surfaces en contact avec des flux de liquide sont pourvues d'une structure de surface qui est appliquée sur les surfaces sous la forme d'une structure finement rainurée à angles vifs, la structure rainurée ordonnée (9, 10) s'étendant essentiellement dans la direction du flux, caractérisée en ce qu'un écartement de rainure ($s^+$) sans dimension et une hauteur de rainure ($h^+$) sans dimension se situent dans l'ordre de grandeur de $h$; $s^+ = 5\text{-}25$, et en ce que la structure rainurée (9, 10) se composant d'une ou de plusieurs rainures présente un tracé en spirale.

2.  Turbomachine selon la revendication 1, caractérisée en ce que la section transversale des rainures définie par la largeur des rainures ($s^+$) et la hauteur des rainures ($h^+$) se situe dans l'ordre de grandeur du $\mu m^2$.

3.  Turbomachine selon la revendication 1 ou 2, caractérisée en ce qu'une structure rainurée (9, 10) constituée de plusieurs rainures présente des rainures parallèles ou légèrement divergentes dans le sens du flux.

4.  Turbomachine selon la revendication 1, 2 ou 3, caractérisée en ce que la structure rainurée (9, 10) est incorporée dans les surfaces.

5.  Turbomachine selon l'une quelconque des revendications 1, 2 ou 3, caractérisée en ce que la structure rainurée (9, 10) fait partie d'un revêtement de surface.

6.  Turbomachine selon l'une quelconque des revendications 1 à 5, caractérisée en ce que la structure rainurée est incorporée, d'une manière constituant la surface, dans une surface en contact avec le liquide ou dans une surface de la pièce moulée constituant la surface en contact avec le liquide.

7.  Turbomachine selon l'une quelconque des revendications 1 à 6, caractérisée en ce que le rapport de la hauteur de rainure ($h^+$) sans dimension à l'écartement des rainures ($s^+$) sans dimension est ≤ 1.

Fig. 1

1

4

5

6

3

2

7

Fig. 2

9

Fig. 5

5

9

4

Fig. 6

9

s

h

Fig. 7

s

h

9

FIG. 3

5

9

10

FIG. 4

5

9